# EUROPÄISCHE PATENTANMELDUNG

(11) **EP 4 109 061 A1**
(43) Veröffentlichungstag der Anmeldung: **28.12.2022**
(21) Anmeldenummer: 22180934.6
(22) Anmeldetag: 24.06.2022
(51) Int. Cl.: G01K 1/10, G01K 13/02, G01F 1/692, G01K 7/18

(54) **EINHEIT FÜR HOCHTEMPERATURANWENDUNGEN**

(30) Priorität: 24.06.2021 DE 102021116345
(71) Anmelder: SCHOTT AG, 55122 Mainz (DE)
(72) Erfinder: BERGER, Florian, 84051 Essenbach (DE); MIX, Christian, 84036 Landshut (DE); FILBERT-DEMUT, Ina, 94431 Pilsting (DE); WILKE, Thorsten, 55234 Nack (DE)
(74) Vertreter: Schott Corporate IP

(57) **Zusammenfassung**

Es wird Einheit (1) für Hochtemperaturanwendungen, insbesondere für Anwendungen oberhalb von 700 °C vorgeschlagen. Die Einheit (1) umfasst ein Gehäuse (100) und mindestens ein elektrisches Funktionselement (10), wobei das mindestens eine elektrische Funktionselement (10) ein nicht-leitendes Substrat (16), ein elektrisch leitfähiges Element (18) und mindestens einen Anschlussdraht (14) oder mindestens ein Anschlusspad umfasst, wobei das mindestens eine elektrische Funktionselement (10) derart in das Gehäuse (100) eingesetzt ist, dass ein erster Abschnitt (11) des elektrischen Funktionselements (10) innerhalb des Gehäuses (100) aufgenommen und durch das Gehäuse (100) von der Umgebung abgeschirmt ist und ein zweiter Abschnitt (12) des elektrischen Funktionselements (10), welcher zumindest einen Teil des mindestens einen Anschlussdrahts (14) oder des Anschlusspads umfasst, von außerhalb zugänglich ist, wobei das mindestens eine elektrische Funktionselement (10) zwischen dem ersten Abschnitt (11) und dem zweiten Abschnitt (12) einen dritten Abschnitt (13) aufweist, welcher in einem elektrisch isolierenden Material (102) des Gehäuses (100) eingebettet ist. Ferner ist vorgesehen, dass das elektrisch isolierende Material (102) das Gehäuse (100) gegenüber dem elektrischen Funktionselement (10) abdichtet, wobei das elektrisch isolierende Material (102) ausgewählt ist aus einem Glas, einer Glaskeramik, einer Kombination mehrerer dieser Materialien oder aus einem Verbundwerkstoff, der als Hauptbestandteil ein Glas oder eine Glaskeramik aufweist, und wobei das isolierende Material (102) an das mindestens eine elektrische Funktionselement (10) angeschmolzen ist, so dass an einer Grenzfläche zwischen diesen eine physikalische und/oder chemische Verbindung ausgebildet ist.

## Beschreibung

Die Erfindung betrifft eine Einheit für Hochtemperaturanwendungen, insbesondere für Anwendungen oberhalb von 700 °C, umfassend ein Gehäuse und mindestens ein elektrisches Funktionselement. Das mindestens eine elektrische Funktionselement kann dabei insbesondere als ein Sensorelement oder als ein Heizelement ausgestaltet sein.

Die Einheit ist insbesondere für den Einsatz in rauen Umgebungen eingerichtet, bei denen neben hohen Temperaturen oberhalb von etwa 700 °C auch aggressive Medien vorhanden sein können, wie z. B. heiße Gase mit korrosiven und/oder zersetzenden chemischen Substanzen und/oder Molekülen. Ein Beispiel für solche rauen Umgebungen sind die Abgasanlagen von Kraftwerken und Verbrennungsmotoren, z. B. in Fahrzeugen wie Automobilen und in Industrieanlagen.

Im Stand der Technik sind Einheiten bekannt, in denen ein Sensorelement, wie beispielsweise ein Temperatursensorelement, in einem Gehäuse, welches beispielsweise ein Schutzrohr umfasst, aufgenommen sind. Diese Gehäuse sind oftmals insbesondere bei hohen Temperaturen nicht hermetisch dicht, so dass die Sensorelemente beispielsweise durch korrosive Gase beeinträchtigt werden. Dies führt insbesondere zu einem Driften eines vom Sensorelement ermittelten Messwerts.

EP 3 301 420 A1 offenbart eine Temperatursensoranordnung mit hoher Beständigkeit gegen aggressive Gase, bei der ein Messeinsatz mit einem Messelement in einem Schutzrohr derart aufgenommen ist, dass ein Zwischenraum entsteht, durch den ein Spülgas strömen kann. Ferner ist vorgesehen, in dem Zwischenraum eine Absorptionseinheit anzuordnen. Die Absorptionseinheit umgibt dabei den Messeinsatz zumindest teilweise und absorbiert mit einem Gettermaterial im Zwischenraum vorhandene Verunreinigungen.

Eine hermetisch dichte Temperatursensoranordnung wird durch EP 3 301 420 A1 nicht beschrieben.

EP3559620 A1 beschreibt eine Sensorvorrichtung mit einem in einem Sensorkopf angeordneten Temperatursensorelement. Der Innenraum des Sensorkopfs ist mit zwei Materialien gefüllt, wobei ein erstes Material der Fixierung einer Komponente des Temperatursensorelements innerhalb des Sensorkopfs dient und das zweite Material der Wärmeleitung innerhalb des Sensorkopfs dient. Bei dem ersten Material kann es sich um ein Keramikpulver oder um einen Keramikverguss handeln.

Das Fixiermaterial der Sensorvorrichtung ermöglicht keine hermetisch dichte Einkapselung des Temperatursensorelements.

DE 10 2006 015 427 B3 offenbart einen Messfühler zur Bestimmung einer physikalischen Größe. Der Messfühler umfasst ein Rohr, an dessen Ende ein Messfühler angeordnet ist. Das Rohr ist durch eine Befestigungshülse hindurchgeführt und wird über eine Glasfüllung elektrisch isoliert in der Befestigungshülse gehalten.

Übliche Glasmaterialien sind für hohe Temperaturen oberhalb von 700 °C nicht geeignet.

Aus WO 2020/094755 A1 ist eine Fügeverbindung zwischen zwei Fügepartnern bekannt, welche ein zumindest teilweise kristallisiertes Glas als isolierendes Bauteil umfasst. Das zumindest teilweise kristallisierte Glas erlaubt das Bilden eines stabilen Gefüges, welches auch bei hohen Temperaturen mechanisch stabil ist. Des Weiteren kann das isolierende Bauteil eine Struktur umfassen, welche einen direkten Weg entlang der Oberfläche des isolierenden Bauteils zwischen den beiden Fügepartner verlängert.

WO 2020/260099 A1 beschreibt eine Sensorkomponente mit einem Durchführungselement für Anwendungen bei Temperaturen oberhalb von 700°C. Das Durchführungselement umfasst eine Durchgangsöffnung, durch die ein Anschlussstift hindurchgeführt ist und mit einem isolierenden Element gehalten wird.

Um die Funktion eines Sensorelements in einer Hochtemperaturanwendung dauerhaft gewährleisten zu können, muss dieser vor kontaminierenden Stoffen aus der Umgebung geschützt werden, welche die Funktion des Sensorelements beeinträchtigen könnten und damit zu einem Verfälschen bzw. Driften eines vom Sensor bereitgestellten Messwerts führen könnten. Hierfür ist es wünschenswert, das Sensorelement bzw. dessen aktive Komponenten, hermetisch abgedichtet in einer Sensoreinheit aufzunehmen.

Eine Aufgabe der Erfindung kann somit darin gesehen werden, eine Einheit für Hochtemperaturanwendungen bereitzustellen, welche ein Gehäuse und mindestens ein elektrisches Funktionselement umfasst.

### Offenbarung der Erfindung

Es wird eine Einheit für Hochtemperaturanwendungen, insbesondere für Anwendungen oberhalb von 700 °C vorgeschlagen, welche ein Gehäuse und mindestens ein elektrisches Funktionselement umfasst. Das mindestens eine elektrische Funktionselement umfasst ein nicht-leitendes Substrat, ein elektrisch leitfähiges Element und mindestens einen Anschlussdraht oder ein Anschlusspad. Dabei ist vorgesehen, dass das mindestens eine elektrische Funktionselement derart in das Gehäuse eingesetzt ist, dass ein erster Abschnitt des elektrischen Funktionselements innerhalb des Gehäuses aufgenommen und durch das Gehäuse von der Umgebung abgeschirmt ist und ein zweiter Abschnitt des elektrischen Funktionselements, welcher zumindest einen Teil des mindestens einen Anschlussdrahts oder des Anschlusspads umfasst, von außerhalb zugänglich ist. Ferner ist vorgesehen, dass das mindestens eine elektrische Funktionselement zwischen dem ersten und dem zweiten Abschnitt einen dritten Abschnitt aufweist, welcher in einem elektrisch isolierenden Material des Gehäuses eingebettet ist, wobei das elektrisch isolierende Material das Gehäuse gegenüber dem elektrischen Funktionselement abdichtet, wobei das elektrisch isolierende Material ausgewählt ist aus einem Glas, einer Glaskeramik, einer Kombination mehrerer dieser Materialien oder aus einem Verbundwerkstoff, der als Hauptbestandteil ein Glas oder eine Glaskeramik aufweist, und wobei das isolierende Material an das mindestens einen elektrischen Funktionselement angeschmolzen ist, so dass an einer Grenzfläche zwischen diesen eine physikalische und/oder chemische Verbindung ausgebildet ist.

Durch diese innige Verbindung zwischen dem elektrisch isolierenden Material und dem mindestens einen Funktionselement sind zusätzliche dichtende Elemente überflüssig. Das mindestens eine elektrische Funktionselement kann dabei insbesondere als ein Sensorelement oder als ein Heizelement ausgestaltet sein.

Durch das Anschmelzen des isolierenden Materials an das mindestens eine elektrische Funktionselement wird eine hermetisch dichte Durchführung geschaffen, durch die der zweite Abschnitt des elektrischen Funktionselements aus dem Gehäuse herausgeführt ist und von außen zugänglich gemacht wird. Als hermetisch dicht wird hierbei eine Durchführung verstanden, die eine Heliumleckrate von weniger als 1·10⁻⁵ mbar·l/sec aufweist und bevorzugt im Bereich 1·10⁻¹⁰ mbar·l/sec bis 1·10⁻⁶ mbar·l/sec liegt. Bevorzugt wird die Heliumleckrate gemäß DIN EN60068-2-17 oder MIL-STD-883-method 1014.9 condition A4 gemessen.

Der erste Abschnitt des mindestens einen elektrischen Funktionselements befindet sich im Inneren des Gehäuses der Einheit. Durch die hermetisch dichte Durchführung des mindestens einen elektrischen Funktionselements ist das Gehäuse hermetisch dicht verschlossen, so dass der erste Abschnitt des elektrischen Funktionselements vor Kontamination durch Stoffe von außerhalb des Gehäuses geschützt wird.

Das mindestens eine elektrische Funktionselement weist zumindest ein elektrisch nicht-leitendes Substrat, ein elektrisch leitfähiges Element und mindestens einen Anschlussdraht oder zumindest ein Anschlusspad auf. Derartige Anschlussdrähte oder Anschlusspads dienen dabei dazu, das elektrische Funktionselement elektrisch zu kontaktieren. Ein Anschlusspad kann dazu beispielsweise als eine metallisierte Fläche ausgebildet sein, welche dazu eingerichtet ist, durch einen elektrischen Leiter, wie beispielsweise ein Draht, kontaktiert zu werden. Beispielsweise kann ein Draht mit einem Anschlusspad durch Löten oder Schweißen verbunden werden. Das Anschlusspad kann insbesondere ein System aus mehreren verschiedenen Schichten umfassen, wobei beispielsweise eine oberste Schicht aus Gold bestehen kann.

Das nicht-leitende Substrat ist bevorzugt aus einem temperaturbeständigen und elektrisch nicht-leitenden Material gefertigt, beispielsweise aus einer Keramik, einem Glas und/oder einer Glaskeramik. Üblicherweise für Keramiksubstrate verwendete Keramiken umfassen Aluminiumoxid (Al₂O₃) und Zirkonoxid (ZrO₂).

Das nicht-leitende Substrat kann beispielsweise als flaches, bevorzugt rechteckigen, Substrat ausgestaltet sind. Es ist aber auch eine zylindrische Ausgestaltung möglich, beispielsweise in Form eines Kreiszylinders.

Das elektrisch leitfähige Element ist bevorzugt auf dem Substrat angeordnet oder in diesem eingebettet. Das elektrisch leitfähige Element wird bevorzugt in Form einer Dickschicht, einer Dünnschicht oder in Form eines Drahts aus einem elektrisch leitfähigem Material bereitgestellt. Bevorzugt ist das Material des elektrisch leitfähigen Elements ein Metall oder eine Metalllegierung oder ist ein Materialgemisch, welches zumindest ein Metall oder eine Metalllegierung umfasst.

Dünnschichten können beispielsweise durch ein Beschichtungsverfahren wie Aufdampfen, chemischer Gasphasenabscheidung, galvanischem Abscheiden oder physikalischer Gasphasenabschneidung erhalten werden. Eine Dünnschicht weist beispielsweise eine Dicke im Bereich von wenigen Nanometern bis wenigen Mikrometern auf. Üblicherweise ist eine Dünnschicht dünner als 1 µm. Dickschichten können beispielsweise durch Auftragen einer Paste, welche das elektrisch leitfähige Material und ein Bindemittel umfasst, und anschließender Temperaturbehandlung erhalten werden. Dickschichten sind typischerweise ein bis zwei Größenordnungen dicker als Dünnschichten.

Ist das elektrische Funktionselement als ein Sensorelement, insbesondere als ein Temperatursensorelement, ausgestaltet, wird bevorzugt Platin oder eine Platinlegierung als Material für das elektrisch leitfähige Element verwendet.

Ist das elektrische Funktionselement als ein Heizelement ausgestaltet, wird bevorzugt ein Metall oder eine Metalllegierung mit hohem Schmelzpunkt und hohem elektrischen Widerstand als elektrisch leitfähiges Element eingesetzt. Insbesondere können Heizleiterlegierung als Material eingesetzt werden wie beispielsweise eine Nickel-Chrom-Legierung, beispielsweise mit 80% Nickel und 20% Chrom, eine beispielsweise unter der Bezeichnung Konstantan erhältliche Legierung aus 55% Kupfer, 44 % Nickel und 1 % Mangan. Bei Verwendung von Metallen sind beispielsweise Wolfram oder Platin geeignet. Es können aber auch Halbleiter wie beispielsweise Siliziumcarbid als elektrisch leitfähiges Element verwendet werden. In dem Heizelement ist das elektrisch leitfähige Element bevorzugt in Form eines Drahts oder einer Dickschicht angeordnet.

Wird das elektrisch leitfähige Element als Schicht ausgeführt, so ist dieser bevorzugt strukturiert, wobei eine oder mehrerer Leiterbahnen ausgebildet werden können. Bevorzugt wird die Schicht dabei so strukturiert, dass eine einzige Leiterbahn ausgebildet wird, welche mäanderförmig auf dem nicht-leitenden Substrat verläuft. Wird das elektrisch leitfähige Element in Form eines Drahts bereitgestellt, so wird dieser bevorzugt gewickelt, wobei der Draht dabei zumindest Teilweise um das Substrat herum gewickelt sein kann. Es ist aber auch möglich, den gewickelten Draht in das Substrat einzubetten.

Der mäanderförmige Teil der Leiterbahn bzw. der gewickelte Teil des Drahts stellt bei Ausführung des elektrischen Funktionselements als Sensorelement oder als Heizelement den aktiven Bestandteil des elektrischen Funktionselements dar. Dieser aktive Bestandteil befindet sich bevorzugt vollständig im ersten Abschnitt des elektrischen Funktionselements, wobei sich kleine Teile einer Leiterbahn, welche zu einer Anschlussstelle führen, bis in den angrenzenden dritten Abschnitt erstrecken können. Sofern ein Anschlusspad vorgesehen ist, können sich Teile der Leiterbahn durch den angrenzenden dritten Abschnitt hindurch zu dem Anschlusspad im zweiten Abschnitt erstrecken und das Anschlusspad somit mit dem mäanderförmigen Teil der Leiterbahn verbinden.

Eine Anschlussstelle, an der eine Leiterbahn durch einen Anschlussdraht kontaktiert wird, befindet sich bevorzugt im dritten Abschnitt des elektrischen Funktionselements. Hierdurch wird erreicht, dass diese Anschlussstelle in dem elektrisch isolierenden Material des Gehäuses eingebettet ist.

Das nicht-leitende Substrat bildet die Basis für das elektrisch leitfähige Element und ist je nach Ausführungsform des elektrisch leitfähigen Elements ausgestaltet. Entsprechend werden flache Substrate bevorzugt in Kombination mit als Dickschicht oder als Dünnschicht ausgestalteten elektrisch leitfähigen Elementen eingesetzt und zylindrische Substrate werden bevorzugt mit als Draht ausgestalteten elektrisch leitfähigen Elementen eingesetzt.

Im Fall der Ausgestaltung des elektrisch leitfähigen Elements als eine Schicht wird der mindestens eine Anschlussdraht als zusätzliches Element mit dieser Schicht an einer Kontaktstelle verbunden, beispielsweise durch Löten oder Schweißen. Ist das elektrisch leitfähige Element als ein Draht ausgestaltet, so kann der mindestens eine Anschlussdraht als eine Verlängerung des elektrisch leitfähigen Elements ausgeführt sein, wobei ein über das nicht-leitende Substrat hinausragender Teil des elektrisch leitfähigen Elements dann als Anschlussdraht dient.

Wird ein zusätzlicher Anschlussdraht verwendet, so wird bevorzugt ein temperaturbeständiges Metall oder eine temperaturbeständige Legierung als Material ausgewählt. Geeignete Materialien für den Anschlussdraht umfassen insbesondere Nickel, Platin oder Nickel/Platinlegierungen. Der Anschlussdraht kann auch beschichtet sein, beispielsweise kann ein platinierter Nickeldraht verwendet werden.

Bevorzugt ist zumindest das elektrisch leitfähige Element und/oder eine elektrische Kontaktstelle zwischen dem mindestens einen Anschlussdraht und dem elektrisch leitfähigem Element des mindestens einen Funktionselements mit einem Abdeckmaterial bedeckt, wobei das Abdeckmaterial bevorzugt von dem elektrisch isolierenden Material verschieden ist.

Das Abdeckmaterial kann insbesondere in Form einer Schicht oder eines Schichtsystems vorliegen. Das Abdeckmaterial kann insbesondere eine Schutzschicht und/oder eine Passivierungsschicht umfassen. Insbesondere im Fall einer Ausgestaltung des elektrisch leitfähigen Elements als Dick- oder Dünnschicht ist bevorzugt zumindest eine Passivierungsschicht vorgesehen, welche das elektrisch leitende Element, insbesondere eine elektrisch leitende Schicht, isoliert und vor Veränderungen durch Stoffe aus der Umgebung schützt. Es können auch Mehrfachschichten aus verschiedenen Materialien vorgesehen sein. Insbesondere Glas oder Keramik sind als Materialien für eine Passivierungsschicht geeignet. Die Schutzschicht und/oder eine Passivierungsschicht kann zusätzlich oder alternativ auch eine Kontaktstelle überdecken, an der ein Anschlussdraht mit der elektrisch leitenden Schicht verbunden ist.

Wird das elektrische Funktionselement als ein Temperatursensorelement ausgestaltet, so ist dieses insbesondere als ein genormter Temperaturmesswiderstand ausgeführt, insbesondere als ein Pt100, Pt200, Pt500, Pt1000 oder Pt10000 Temperaturmesswiderstand. Ein Temperaturmesswiderstand ist dabei ein elektrisches Funktionselement, dessen elektrischer Widerstand sich in charakteristischer Weise mit der Temperatur verändert.

Es ist möglich, mehrere Funktionen in einem elektrischen Funktionselement zu integrieren. Beispielsweise kann ein flaches keramisches Substrat auf einer ersten Seite eine Platin-Dünnschicht aufweisen, welche als Temperatursensor dient, und auf einer der ersten Seite entgegengesetzt zweiten Seite kann das keramische Substrat eine Dickschicht aufweisen, welche als ein Heizelement dient.

Ebenfalls ist es denkbar, dass ein elektrisches Funktionselement mehrere Substrate mit jeweils einem oder mehreren elektrisch leitfähigen Elementen umfasst und somit mehrere Funktionen in einem einzigen elektrischen Funktionselement gebündelt werden.

Das elektrisch isolierende Material ist bevorzugt aus einem Glas oder einer Glaskeramik, oder einer Kombination mehrerer dieser Materialien ausgewählt. Alternativ dazu kann das elektrisch isolierende Material auch ein Verbundwerkstoff sein, dessen Hauptbestandteil ein Glas oder eine Glaskeramik ist, wobei der Verbundwerkstoff zusätzlich einen Zuschlagsstoff wie z.B. ein Keramikpulver enthalten kann. Dabei besteht der Verbundwerkstoff bevorzugt zu mehr als 70 Gew.-%, bevorzugt mehr als Gew.-80%, besonders bevorzugt zu mehr als 90 Gew.-% aus Glas und/oder einer Glaskeramik.

Um die Anwendung im Hochtemperaturbereich zu ermöglichen, ist das elektrisch isolierende Material insbesondere so ausgewählt, dass eine Schmelztemperatur oder im Fall eines Glases die Glasübergangstemperatur oberhalb von bevorzugt 700 °C liegt. Das elektrisch isolierende Material ist dabei dazu eingerichtet, an das mindestens eine elektrische Funktionselement angeschmolzen zu werden, wodurch eine innige Verbindung erzielt wird. Diese Verbindungen werden auch als Fügeverbunde oder Fügeverbindungen bezeichnet.

Bei dem elektrisch isolierenden Material kann es sich insbesondere um ein Lotglas handeln. Lotgläser (auch als Glaslote bzw. auf Englisch als "sealing glasses" bezeichnet) werden verwendet, um dichte Verbindungen zwischen zu fügenden Bauteilen herzustellen.

Das elektrisch isolierende Material ist bevorzugt als ein Formkörper ausgestaltet, der als Gehäuse der Einheit oder als ein Teil des Gehäuses der Einheit dient.

Bei dem elektrisch isolierenden Material kann es sich insbesondere um eine Glaskeramik bzw. ein teilweise kristallisiertes Glas handeln. Glaskeramiken bzw. zumindest teilweise kristallisierte Gläser können durch Kristallisation, bevorzugt eine kontrollierbare Kristallisation, besonders bevorzugt eine kontrollierte Kristallisation erhalten werden, wobei eine Struktur erhalten wird in der eine enge Verteilung der räumlichen Dimensionen der Kristalle oder Kristallite welche derselben Kristallphase zugeordnet werden können erreicht werden kann und/oder wobei eine bevorzugte Anordnung der Kristalle oder Kristallite erzielt werden kann.

Durch die Kristallisation wird aus einem kristallisierbaren Glas ein zumindest teilweise kristallisiertes Glas, also ein Glas, dessen Kristallphasenanteil, bezogen auf das Volumen, mehr als 0,1% beträgt, erhalten. Ein solches zumindest teilweise kristallisiertes Glas, welches mindestens eine Kristallphase sowie eine glasige Phase, beispielsweise ein zumindest teilweise kristallisierbares Glas oder eine Restglasphase, umfasst, wird im Rahmen der vorliegenden Erfindung auch als Glaskeramik bezeichnet. Es ist auch möglich, dass die Glaskeramik in dem Sinne vollständig kristallisiert vorliegt, dass die kristallisierte Phase mehr als 99 Vol.-% umfasst, beispielsweise bis zu 99,9 Vol.-%. Bevorzugt ist der Anteil der Restglasphase noch so hoch, dass eine gute Benetzung eines Fügepartners wie insbesondere des mindestens einen elektrischen Funktionselement gegeben ist. Vorteilhaft beträgt dafür der Anteil der Restglasphase am zumindest teilweise kristallisierten Glas mindestens 5 Vol.-%, bevorzugt mindestens 10 Vol.-%.

Hohe Kristallisationsgrade des elektrisch isolierenden Materials sind vorteilhaft, um Reaktionen mit Materialien des elektrischen Funktionselements zu vermeiden, wobei insbesondere eine Ionenmigration bei hohen Temperaturen vermieden wird.

Ein solches teilweise kristallisiertes Glas ist beispielsweise aus WO 2020/094755 A1 bekannt. Das dort beschriebene teilweise kristallisierte Glas ist für hochtemperaturstabile Fügeverbindungen geeignet und vorteilhafterweise auch für mechanisch belastete Fügeverbindungen einsetzbar.

Das bevorzugte zumindest teilkristallisierte Glas umfasst neben SiO₂

| | |
|---|---|
| La₂O₃ | größer 0,3 Mol-% bis kleiner 5 Mol-%, vorzugsweise kleiner oder gleich 4,5 Mol-%, besonders bevorzugt kleiner oder gleich 4 Mol-%, |
| Nb₂O₅ | 0 Mol-% bis 9 Mol-%, |
| Ta₂O₅ | 0 Mol-% bis 7 Mol-%, |

wobei

| | |
|---|---|
| Σ (A₂O₅) | größer 0,2 Mol-% bis 9 Mol-%, |

wobei A ein Element ist, welches in Oxiden üblicherweise die Oxidationszahl V+ aufweist, und beispielsweise Nb und/oder Ta oder P und / oder Mischungen hiervon umfasst oder umfassen kann.

Es hat sich gezeigt, dass eine feste Fügeverbindung, beispielsweise eine hochtemperaturstabile und/oder eine mechanisch hochbelastbare Fügeverbindung, durch eine ausreichende, d.h. eine in den oben genannten Grenzen liegende, Zugabe der Oxide La₂O₃, Ta₂O₅ und / oder Nb₂O₅ sowie ggf. weiterer Oxide des Zusammensetzung A₂O₅ erzielt werden kann.

A bezeichnet hierbei ein Element, welches in Oxiden üblicherweise die Oxidationszahl V+ aufweist. So ist es möglich, dass nicht alle vom kristallisierbaren oder zumindest teilweise kristallisierten Glas umfassten Atome "A" in derselben Oxidationsstufe vorliegen.

Die Oxide La₂O₃, Nb₂O₅ und Ta₂O₅ sowie gegebenenfalls weitere vom Glas umfasste Oxide A₂O₅ werden dabei im Rahmen der vorliegenden Offenbarung auch als "Glasmatrix bildende Oxide" bezeichnet, wobei unter diesem Begriff im Rahmen der vorliegenden Offenbarung zu verstehen ist, dass solche Oxide nach der thermischen Behandlung des kristallisierbaren Glases, also wenn das Glas als zumindest teilweise kristallisiertes Glas vorliegt, zunächst in der Glasmatrix verbleiben. Der Begriff der "Glasmatrix-bildende Oxide" unterscheidet sich damit vom allgemeineren Begriff der "glasbildenden Oxide". Insbesondere sind die Oxide von MgO und CaO im Rahmen der vorliegenden Offenbarung keine Glasmatrix-bildenden Oxide, auch wenn beispielsweise CaO ein üblicher Bestandteil herkömmlicher Gläser, beispielsweise von Kalk-Natron-Gläsern, ist. In den Gläsern gemäß Ausführungsformen der vorliegenden Offenbarung werden Oxide wie CaO und MgO in die Kristallphasen eingebaut, verbleiben also gerade nicht in der Glasmatrix und sind daher auch keine Glasmatrix-bildenden Oxide.

Es ist aber durchaus möglich, dass zumindest ein Teil der Glasmatrix-bildenden Oxide, beispielsweise La₂O₃, im weiteren Verlauf der Keramisierung zumindest teilweise in Kristallphasen eingebaut werden können. Jedoch verbleibt normalerweise ein wenn auch geringer Restgehalt an glasiger Phase, welcher insbesondere durch die Glasmatrix-bildenden Oxide gebildet wird.

Die Ausbildung der Fügeverbindung gemäß der vorliegenden Offenbarung mit den Oxiden La₂O₃ sowie Nb₂O₅ und/oder Ta₂O₅ sowie ggf. weiterer Oxide A₂O₅ in den oben genannten Grenzen ist vorteilhaft, da das zumindest teilweise kristallisierte Glas auf diese Weise besonders vorteilhaft so ausgestaltet ist, dass während einer Temperaturbehandlung zur Erzeugung der Verbindung ein Anglasen erfolgt. Auf diese Weise wird also besonders vorteilhaft eine feste Verbindung zwischen den einzelnen Teilen der Fügeverbindung erzeugt, insbesondere eine feste Verbindung des zumindest teilweise kristallisierten Glases an den Fügepartner ermöglicht. Die Begrenzung der Glasmatrix bildenden Oxide in den vorgenannten Grenzen stellt jedoch vorteilhaft sicher, dass gleichzeitig eine hohe Temperaturstabilität und/oder eine hohe mechanische Festigkeit des Fügeverbundes gegeben ist.

Im Rahmen der vorliegenden Offenbarung gelten die folgenden Definitionen:
Im Rahmen der vorliegenden Offenbarung wird als kristallisierbares Glas ein Glas verstanden, welches einer Kristallisation, insbesondere einer gesteuerten oder zumindest steuerbaren Kristallisation, zugänglich ist. Unter einer gesteuerten Kristallisation wird hierbei verstanden, dass durch eine gezielte Temperaturbehandlung das kristallisierbare Glas in einen Zustand überführt werden kann, in welchem das Glas zumindest teilweise kristallisiert vorliegt und wobei die kristallographischen Zusammensetzung des zumindest teilweise kristallisierten Glases und / oder dessen Gefüge, d.h. die räumliche Anordnung und / oder die Größe der vom zumindest teilweise kristallisierten Glas umfassten Kristalle und / oder Kristallite vorzugsweise gezielt eingestellt wird. Vorzugsweise kann durch eine gesteuerte Kristallisation beispielsweise ein Gefüge erhalten werden, bei welchem die Kristallite eine im Wesentlichen einheitliche Größe beispielsweise im einstelligen Mikrometerbereich aufweisen, also beispielsweise alle Kristallite einen Äquivalentdurchmesser von etwa 1 µm bis 3 µm aufweisen.

Selbstverständlich sind auch andere Gefüge mit größeren oder kleineren Kristalliten möglich.

Sofern das zumindest teilweise kristallisierte Glas mehrere unterschiedliche Kristallphasen umfasst, ist es auch möglich, dass die durchschnittliche Kristall- oder Kristallitgröße innerhalb einer Kristallphase relativ ähnlich ist, jedoch möglicherweise zwischen den einzelnen Kristallphasen hinsichtlich der Kristallitgröße starke Unterschiede bestehen.

Im Gegensatz zur vorzugsweise gesteuerten oder steuerbaren Kristallisation ist die spontane Kristallisation eines Glases zu sehen, bei der unerwartet Kristallphasen, häufig auch unerwünschte Kristallphasen auftreten und insbesondere auch eine vollständige Entglasung auftreten kann.

Im Rahmen der vorliegenden Offenbarung wird unter einem Kristallaggregat oder unter einer Kristallvergesellschaftung eine Verwachsung von mindestens zwei Kristallen oder Kristalliten verstanden. Die Kristalle oder Kristallite können dabei insbesondere regellos miteinander verwachsen sein. Dies bedeutet, dass die einzelnen Kristallite oder Kristalle eines Aggregats nicht entlang einer Vorzugsrichtung oder entlang einer bestimmten Kristallebene miteinander verwachsen sein müssen.

Unter einer nadeligen Ausbildung eines Kristalls oder eines Kristallits wird verstanden, dass der Kristall oder Kristallit eine Richtung aufweist, in der seine Abmessung mindestens eine Größenordnung größer ist als die Abmessungen in den beiden anderen Raumrichtungen. Mit anderen Worten kann ein Kristall oder Kristallit mit einer nadeligen Ausbildung nadelförmig oder stabförmig oder in Form eines Prismas ausgebildet sein, wobei die lateralen Abmessungen der prismatischen Grundform mindestens eine Größenordnung kleiner sind als die Länge des Kristalls oder Kristallits. Solche Kristalle oder Kristallite werden auch als prismatisch ausgebildet bezeichnet.

Die Kristallite können auch plättchenförmig ausgebildet sein, also als kleine Plättchen das kristallisierte Glas durchsetzen. Im Schnittbild stellt sich eine solche Ausbildung ebenfalls als Stab dar, weswegen eine Unterscheidung im Einzelfall schwierig ist. Als Plättchen wird im Rahmen der vorliegenden Offenbarung eine geometrische Form verstanden, bei welchem die laterale Abmessung in einer Raumrichtung eines kartesischen Koordinatensystems (die Dicke) eine Größenordnung geringer ausgebildet ist als die lateralen Abmessungen (Länge, Breite) in den beiden anderen, zur ersten Richtung senkrechten Richtungen.

Unter einer radialstrahligen Anordnung von Kristallen oder Kristalliten wird im Rahmen der vorliegenden Offenbarung verstanden, dass nadelig oder plättchenförmig ausgebildete Kristalle, beispielsweise nadelförmige oder prismatische Kristalle oder Kristallite um ein Zentrum herum angeordnet sind, sodass ein Ende in Richtung desselben Punktes zeigt und das jeweilige andere Ende in unterschiedliche Raumrichtungen radial nach außen zeigt. Beispielsweise können sich die Enden, welche in Richtung des Zentrums zeigen, am zentralen Punkt berühren. Dies ist jedoch nicht notwendig. Eine solche Ausbildung von Kristallaggregaten, die von einem Zentrum aus radial nach außen zeigen, liegt beispielsweise in Form einer sphärolithischen Ausbildung eines Kristallaggregats vor. Eine solche sphärolithische Ausbildung ist eine annähernd kugelige oder ellipsoide Ausgestaltung des Kristallaggregats und kann in zweidimensionaler Darstellung annähernd die Form eines Kreises aufweisen. In der Praxis kommt es jedoch aufgrund der Verwachsungen von Kristallen und Kristallaggregaten in einem Gefüge oft zur Abweichung von der idealen kugeligen oder kreisförmigen Ausbildung eines Sphäroliths. Insbesondere können die den Sphärolith bildenden Kristalle oder Kristallite unterschiedliche Längen und/oder Dicken aufweisen.

Eine weitere Ausgestaltung einer radialstrahligen Anordnung ist eine fächerförmige Ausbildung im zweidimensionalen Schnitt. Beispielsweise ist es möglich, dass eine Ausbildung der Kristalle oder Kristallite in einer bestimmten Raumrichtung im Gefüge nicht möglich ist. Die Kristallite oder Kristalle streben auch hier von einem Zentrum nach außen, jedoch nur innerhalb eines bestimmten Raumwinkels.

Unter einer stabförmig oder plättchenförmig durchsetzenden Anordnung wird verstanden, dass die einzelnen Kristalle oder Kristallite nicht von einem gemeinsamen Zentrum aus in unterschiedliche Raumrichtungen nach außen streben, sondern regellos, beispielsweise ohne ausgesprochene Vorzugsrichtung, angeordnet sind. Insbesondere können die Kristallite oder Kristalle gegeneinander verzahnt angeordnet sein. Eine solche Struktur kann beispielsweise auch mit dem Aufbau eines "Kartenhauses" verglichen werden, bei welchem die einzelnen Plättchen (wie die Karten eines Kartenhauses) gegeneinander angeordnet sind und eine stabile Struktur bilden.

Im Rahmen der vorliegenden Offenbarung wird unter einem Kristallisationskeim ein Ausgangspunkt für eine Kristallisation verstanden. Der Kristallisationskeim begünstigt die Anlagerung von Atomen zum Aufbau eines kristallinen Gitters beispielsweise thermodynamisch oder kinetisch. Insbesondere kann es sich bei einem Kristallisationskeim um eine Gitterfehlstehle und/oder eine Anordnung von Atomen handeln. Häufig können Grenzflächen Ausgangspunkte für Kristallisation sein bzw. umfassen Grenzflächen solche Ausgangspunkte für eine Kristallisation.

Gemäß einer Ausführungsform der Fügeverbindung umfassen die Kristallite zumindest teilweise an den Korngrenzen Kristallisationskeime und/oder sind an den Korngrenzen der Kristallite zumindest teilweise Anreicherungen umfassend Lanthan, insbesondere umfassend Lanthanverbindungen, angeordnet.

Eine solche Ausgestaltung einer Fügeverbindung ist vorteilhaft, um die Ausbildung einer besonders festen Verbindung zwischen zumindest teilweise kristallisiertem Glas und Fügepartner zu ermöglichen. Sofern die Kristallite zumindest teilweise an den Korngrenzen Kristallisationskeime umfassen, fördert dies die Ausbildung des Gefüges des zumindest teilweise kristallisierten Glases umfassend Kristallaggregate mit beispielsweise radialstrahliger oder stabförmig oder plättchenförmig durchsetzender Anordnung, beispielsweise in der Art eines Kartenhauses.

Dies ist ebenfalls der Fall, wenn an den Korngrenzen der Kristallite zumindest teilweise Anreicherungen umfassend Lanthan, insbesondere umfassend Lanthanverbindungen, angeordnet sind. Die Erfinder vermuten, dass Anreicherungen von Lanthan, beispielsweise von Lanthanverbindungen, als effektive Kristallisationskeime wirken können.

Eine weitere bevorzugte Glaskeramik enthält in Mol-% auf Oxidbasis:

| | |
|---|---|
| SiO₂ | 25 - 55, bevorzugt 35 - 50, |
| B₂O₃ | 0,1 - 15, bevorzugt 5 -15, |
| Al₂O₃ | 0 - 15, bevorzugt 0 - 5, besonders bevorzugt 0 - <2, |
| MO | 20 - 50, bevorzugt 30 - 50, |

wobei MO ausgewählt ist aus der Gruppe bestehend aus, einzeln oder in jeder beliebigen Kombination, MgO und/oder CaO und/oder SrO und/oder BaO,
mit SrO und/oder BaO >0 und MgO <12, und

| | |
|---|---|
| M₂O | 0 - <2, bevorzugt 0 - < 1, |

wobei M₂O ausgewählt ist aus der Gruppe bestehend aus, einzeln oder in jeder beliebigen Kombination, Li₂O und/oder Na₂O und/oder K₂O.

Diese Glaskeramik wird beispielsweise in DE 10 2014 218 983 A1 im Zusammenhang mit einem Durchführungselement beschrieben und zeichnet sich unter anderem durch einen spezifischen Durchgangswiderstand von mehr als 1,0 · 10¹⁰ Ω cm aus.

Eine weitere bevorzugte Glaskeramik bzw. ein weiteres zumindest teilweise kristallisiertes Glas umfasst folgende Oxide, angegeben in Gew.-%:

| | |
|---|---|
| SiO₂: | 20 bis 60, bevorzugt 25 bis 50 |
| Al₂O₃: | 0,5 bis 20, bevorzugt 0,5 bis 10 |
| CaO: | 10 bis 50 |
| MgO: | 0,5 bis 50, bevorzugt 0,5 bis 10 |
| Y₂O₃: | 0,1 bis 20, bevorzugt 3 bis 20 |
| ZrO₂: | 0,1 bis 25, bevorzugt 3 bis 20 |
| B₂O₃: | 1 bis 15, bevorzugt 3 bis 12, |

wobei weiterhin HfO₂ optional bis zu 0,25 Gew.-% enthalten sein kann.

Ein weiteres geeignetes zumindest teilweise kristallisiertes Glas bzw. Glaskeramik umfasst folgende Oxide, Angaben in Gew.-%:

| | | | |
|---|---|---|---|
| SiO₂: | | 36 bis 54, | bevorzugt 40 bis 54 |
| Al₂O₃: | | 8 bis 16, | bevorzugt 8 bis 13 |
| CaO: | | 0 bis 35, | bevorzugt 5 bis 25 |
| MgO: | | 0 bis 17, | bevorzugt 3 bis 14 |
| RO: | | 8 bis 39, | bevorzugt 8 bis 35 |
| ZrO₂: | 0 bis 25, | bevorzugt 0 bis 17 | |
| B₂O₃: | 0 bis 3, | | bevorzugt 0 bis 2, besonders bevorzugt 0 |

wobei der Anteil RO die Oxide BaO, SrO, MgO, ZnO jeweils einzeln oder in Summe oder in beliebigen Mischungen bezeichnet und
bevorzugt RO einzeln oder in jeder beliebigen Kombination in Gew.%:

| | |
|---|---|
| BaO | 0 - 36 |
| MgO | 0 - 22 |
| CaO | 0 |

beträgt. Ein solches zumindest teilweise kristallisiertes Glas ist beispielsweise aus WO 2017/220700 A1 bekannt.

Das zumindest teilkristallisierte Glas wird zunächst über einen Schmelzprozess glasig als kristallisierbares Glas erhalten und wird erst in einer nachfolgenden Temperaturbehandlung zumindest teilweise kristallisiert.

Die hermetisch dichte Verbindung zwischen dem elektrisch isolierenden Material und dem mindestens einen elektrischen Funktionselement wird dadurch erzielt, dass das elektrisch isolierende Material an das elektrische Funktionselement angeschmolzen wird. Hierzu kann beispielsweise ein Grünling bereitgestellt werden, welcher das elektrisch isolierende Material oder eine Vorstufe davon enthält, beispielsweise ein kristallisierbares Glas. Der Grünling wird dann zusammen mit dem mindestens einen elektrischen Funktionselement einer Temperaturbehandlung unterzogen, durch die das elektrisch isolierende Material an das elektrische Funktionselement angeschmolzen wird und eine physikalische und/oder chemische Verbindung entsteht, welche hermetisch dicht ist. Im Fall eines kristallisierbaren Glases als Vorstufe wird dabei das kristallisierbare Glas zumindest teilweise kristallisiert.

Die Kristallisation kann hierbei gesteuert in dem Sinne ablaufen, dass eine gezielte Temperaturbehandlung, welche beispielsweise zur Bildung einer Vorläuferphase für die mindestens eine Kristallphase, durchgeführt wird, beispielsweise eine sogenannte Keimbildung. Es ist aber auch möglich, dass die Kristallisation ungesteuert in der Form erfolgt, dass sie während eines sonstigen Verfahrensschrittes auftritt, beispielsweise im Rahmen einer thermischen Behandlung, in welchem eine hermetisch dichte Verbindung zwischen einem Material, beispielsweise dem Material einer Einhausung, und dem zumindest teilweise kristallisierten Glas erzeugt wird, ohne dass weitere Verfahrensschritte zur gezielten Kristallisation erfolgten.

Das Gehäuse der Einheit kann eine Kappe aus einem temperaturbeständigen Material umfassen, welche das elektrisch isolierende Material zumindest teilweise umschließt. Die Kappe kann dabei insbesondere topfförmig ausgestaltet sein, wobei die offene Seite der Topfform in Richtung des zweiten Abschnitts des mindestens einen elektrischen Funktionselemente zeigt. Ebenfalls ist es bevorzugt, dass die Schutzkappe derart geformt und angeordnet ist, dass sich der erste Abschnitt des mindestens einen elektrischen Funktionselements innerhalb der Schutzkappe befindet.

Das Gehäuse der Einheit kann ein Schutzrohr aus einem temperaturbeständigen Material umfassen, welches zumindest einen Teil des zweiten Abschnitts des elektrischen Funktionselements umgibt. Hierdurch können insbesondere die Anschlussdrähte des mindestens einen elektrischen Funktionselements geschützt werden. Sofern das Gehäuse auch eine Kappe umfasst ist das Schutzrohr bevorzugt mit der Kappe des Gehäuses verbunden. Das Verbinden kann beispielsweise mittels Laserschweißen oder mittels Löten erfolgen.

Das temperaturbeständige Material des Schutzrohrs und/oder das temperaturbeständige Material der Kappe ist bevorzugt ausgewählt aus einem temperaturbeständigen Stahl bzw. Legierung oder einer temperaturbeständigen Keramik und ist insbesondere ausgewählt aus Alloy 600, Stahl 1.4762, Al₂O₃-Keramik. Sofern das Gehäuse sowohl eine Kappe als auch ein Schutzrohr umfasst können diese je nach Ausführungsvariante aus dem gleichen Material oder aus verschiedenen Materialien gefertigt sein.

Bevorzugt ist das Gehäuse der Einheit derart ausgestaltet und eingerichtet, dass zumindest der erste Abschnitt des mindestens einen elektrischen Funktionselements von Metallteilen des Gehäuses abgeschirmt wird. Hierzu kann vorgesehen sein, den ersten Abschnitt vollständig in dem elektrisch isolierenden Material einzubetten, den ersten Abschnitt mit einem anderen, nicht-metallischem Material abzudecken oder einen Hohlraum auszubilden, der den ersten Abschnitt aufnimmt und dessen Wandungen nicht-metallisch sind.

Bevorzugt umfasst das Gehäuse der Einheit ein Schutzelement aus einem Glas, einer Glaskeramik, einer Keramik oder einer Kombination mehrerer dieser Materialien. Dabei sind die im Zusammenhang mit dem elektrisch isolierenden Material des Gehäuses beschriebenen Materialien grundsätzlich auch als Material für das Schutzelement geeignet.

Dieses Schutzelement kann sich beispielsweise an das elektrisch isolierende Material bzw. einem Formkörper aus dem elektrisch isolierenden Material anschließen.

Bevorzugt ist der erste Abschnitt des elektrischen Funktionselements innerhalb des Gehäuses in einem Hohlraum aufgenommen, wobei der Hohlraum bevorzugt evakuiert ist oder mit einem Inertgas, beispielsweise Stickstoff oder Argon, gefüllt ist.

Vorteilhafterweise steht dann der erste Abschnitt des mindestens einen elektrischen Funktionselements mit keinem Material des Gehäuses in direktem Kontakt, welches möglicherweise in Wechselwirkung mit dem elektrischen Funktionselement treten könnte und dadurch beispielsweise einen Messwert verfälschen könnte. Insbesondere wird eine durch Korrosion oder durch Migration verursachte Alterung verhindert oder zumindest stark reduziert. Dies verringert wiederum eine zeitliche Drift von Messwerten, welche von dem elektrischen Funktionselement erhalten werden.

Dabei bestehen die Wände des Hohlraums bevorzugt aus dem elektrisch isolierenden Material des Gehäuses. Sofern das Gehäuse ein Schutzelement umfasst kann dieses Schutzelement dabei eine der Wände des Hohlraums bilden.

Bevorzugt ist der erste Abschnitt des mindestens einen elektrischen Funktionselements vollständig in dem elektrisch isolierenden Material des Gehäuses eingebettet. Insbesondere sind dadurch die ersten beiden Abschnitte nahtlos durch das elektrisch isolierende Material des Gehäuses umschlossen.

Insbesondere in dem Fall, dass das Gehäuse eine Schutzkappe umfasst, wird hierdurch erreicht, dass das elektrische Funktionselement auch vor einer Beeinflussung durch das Material der Schutzkappe abgeschirmt ist.

Die Einheit kann zusätzlich mindestens ein Halteelement umfassen, welches insbesondere zur Unterstützung des mindestens einen Anschlussdrahts eingerichtet sein kann. Hierzu kann das Halteelement beispielsweise in Form eines Rohrs ausgestaltet sein, durch das zumindest ein Anschlussdraht geführt wird.

Das mindestens eine Halteelement kann aus demselben Material wie das elektrisch isolierende Material bestehen und mit diesem einstückig ausgebildet sein. Das Halteelement kann aber auch separat ausgebildet sein und mit dem elektrisch isolierenden Material verbunden sein. Alternativ dazu kann das mindestens eine Halteelement aus einem anderen Material ausgewählt aus einem Glas, einer Glaskeramik oder einer Keramik bestehen. In diesem Fall ist das mindestens eine Halteelement bevorzugt in dem elektrisch isolierenden Material teilweise eingebettet und durch dieses gehalten.

Bevorzugt ist ein thermischer Ausdehnungskoeffizient des elektrisch isolierenden Materials an einen thermischen Ausdehnungskoeffizienten des mindestens einen elektrischen Funktionselements angepasst. Bevorzugt ist dabei ein Unterschied zwischen den thermischen Ausdehnungskoeffizienten kleiner als 5·10⁻⁶/K, besonders bevorzugt kleiner als 3·10⁻⁶/K und ganz besonders bevorzugt kleiner als 1·10⁻⁶/K.

Falls das elektrische Funktionselement ein Zirkonoxid-Keramiksubstrat mit einer Platinschicht aufweist ist es entsprechend bevorzugt, den thermischen Ausdehnungskoeffizienten des elektrisch isolierenden Materials an den Ausdehnungskoeffizienten vom Platin, also ca. 8,8 ·10⁻⁶/K, und den von Zirkonoxid, also ca. 10,2 ·10⁻⁶/K anzupassen. Entsprechend wird für das elektrisch isolierende Material ein Ausdehnungskoeffizient im Bereich von ca. 8,8 ·10⁻⁶/K bis 10,2·10⁻⁶/K bevorzugt.

Der thermische Ausdehnungskoeffizient des elektrisch isolierenden Materials wird insbesondere durch eine entsprechende Auswahl des Materials, also des verwendeten Glases oder der verwendeten Glaskeramik, eingestellt. Dabei kann das ausgewählte Material oder auch eine Mischung mehrerer dieser Materialien durch Zuschlagsstoffe modifiziert werden. Beispielsweise kann der thermische Ausdehnungskoeffizient des elektrisch isolierenden Materials durch eine gezielte Zugabe eines Keramikpulvers wie z.B. MgO als Zuschlagsstoff eingestellt werden.

Der thermische Ausdehnungskoeffizient des elektrisch isolierenden Materials wird im Fall eines Funktionselements mit einer Platinschicht bevorzugt an den thermischen Ausdehnungskoeffizienten von Platin angepasst. Alternativ dazu kann der thermische Ausdehnungskoeffizient an den Mittelwert der Ausdehnungskoeffizienten des elektrisch leitenden Elements und des Substrats des elektrischen Funktionselements angepasst werden. Dies ist insbesondere bei Verwendung eines Substrats auf Basis von Aluminiumoxid bevorzugt.

Bevorzugt ist ein elektrisches Funktionselement der Einheit als ein Temperatursensorelement ausgebildet, wobei das Temperatursensorelement bevorzugt ein Keramiksubstrat und eine darauf angeordnete strukturierte Widerstandsschicht umfasst, wobei das Temperatursensorelement besonders bevorzugt als ein Pt100, Pt200, Pt500, Pt1000 oder Pt10000 Temperatursensor ausgebildet ist. Entsprechend handelt es sich bei dem elektrischen Funktionselement bevorzugt um einen genormten Temperaturmesswiderstand in einer temperaturbeständigen Bauform. Dieser Temperaturmesswiderstand ist dabei über das elektrisch isolierende Material in dem Gehäuse der Einheit derart gehalten, dass der aktive Teil des Temperaturmesswiderstands vollständig in dem Gehäuse aufgenommen ist. Dabei dichtet das elektrisch isolierende Material das Gehäuse zu dem aus dem Gehäuse herausragenden Teil des Temperaturmesswiderstands, der die Anschlussdrähte umfasst, hermetisch ab, so dass der aktive Teil des Temperaturmesswiderstands vor Einflüssen aus der Umgebung geschützt ist. Somit wird eine temperatur- und korrosionsbeständige Temperaturmesseinheit erhalten.

Bevorzugt ist ein elektrisches Funktionselement der Einheit als ein Heizelement ausgebildet. Hierdurch wird eine temperatur- und korrosionsbeständige Heizeinheit erhalten.

Eine Temperaturmesseinheit und eine Heizeinheit können zusammen eingesetzt werden, um beispielsweise eine Strömung eines Fluids wie eines Gases oder einer Flüssigkeit zu messen. Dabei ermittelt beispielsweise die Temperaturmesseinheit die momentane Temperatur und die Heizeinheit wird derart angesteuert, dass eine konstante Temperatur angestrebt wird. Aus der Energie, die durch die Heizeinheit benötigt wird, um die Temperatur zu halten, kann dann darauf geschlossen werden, wieviel Fluid an den beiden Einheiten vorbeiströmt.

Eine solche thermische Durchflussmessung kann auch über eine integrierte Durchflussmesseinheit erfolgen. Entsprechend umfasst eine als thermischer Durchflussmesser ausgebildete Einheit bevorzugt mindestens zwei elektrische Funktionselemente, wobei die Einheit mindestens ein als Temperatursensorelement und mindestens ein als Heizelement ausgebildetes elektrisches Funktionselement umfasst. Selbstverständlich ist es auch möglich, beide Funktionen in einem elektrischen Funktionselement zu integrieren. In diesem Fall umfasst die als thermischer Durchflussmesser ausgebildete Einheit entsprechend ein als kombiniertes Temperatursensorelement und Heizelement ausgebildetes elektrisches Funktionselement.

Die vorgeschlagenen Einheiten können insbesondere in Bereichen verwendet werden, bei denen hohe Temperaturen und widrige Bedingungen wie korrosive Medien vorliegen. Die vorgeschlagenen Einheiten sind zudem auch mechanisch äußerst robust, so dass diese auch in Bereichen mit hohen mechanischen Belastungen wie starken Vibrationen eingesetzt werden können. Bevorzugte Verwendungsmöglichkeiten für die vorgeschlagenen Einheiten beinhalten beispielsweis Sensoranwendungen im Verkehrsbereich, insbesondere im Automobilbereich, dem Kraftwerksbereich und der Industrie, insbesondere der chemischen Industrie.

Eine besonders bevorzugte Verwendung der vorgeschlagenen Einheiten betrifft Messungen an Abgasen, insbesondere Abgas von Kraftwerken, Verbrennungsmotoren, Triebwerken oder Industrieanlagen. Hierbei wirken sich die gute Temperaturbeständigkeit, die Resistenz gegen korrosive Medien und die hohe mechanische Stabilität der Einheiten besonders vorteilhaft aus.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungen und Ausführungsformen der Erfindung sind in den Zeichnungen dargestellt und werden in der nachfolgenden Beschreibung näher erläutert, wobei sich gleiche Bezugszeichen auf gleiche oder ähnliche oder funktional gleiche Bauelemente oder Elemente beziehen.

### Dabei zeigen in schematischer Form

Fig. 1 eine schematische Schnittansicht eines als Temperatursensorelement ausgeführten elektrischen Funktionselements,
Fig. 2 eine erste Ausführungsform einer Einheit mit einem elektrischen Funktionselement für Hochtemperaturanwendungen,
Fig. 3 eine zweite Ausführungsform einer Einheit, welche zusätzlich ein Halteelement umfasst,
Fig. 4 eine dritte Ausführungsform einer Einheit,
Fig. 5 eine vierte Ausführungsform einer Einheit,
Fig. 6 eine fünfte Ausführungsform einer Einheit,
Fig. 7 eine sechste Ausführungsform einer Einheit,
Fig. 8 eine siebte Ausführungsform einer Einheit,
Fig. 9 eine achte Ausführungsform einer Einheit,
Fig. 10 eine neunte Ausführungsform einer Einheit,
Fig. 11 eine zehnte Ausführungsform einer Einheit, und
Fig. 12 eine elfte Ausführungsform einer Einheit, welche zwei elektrische Funktionselemente umfasst.

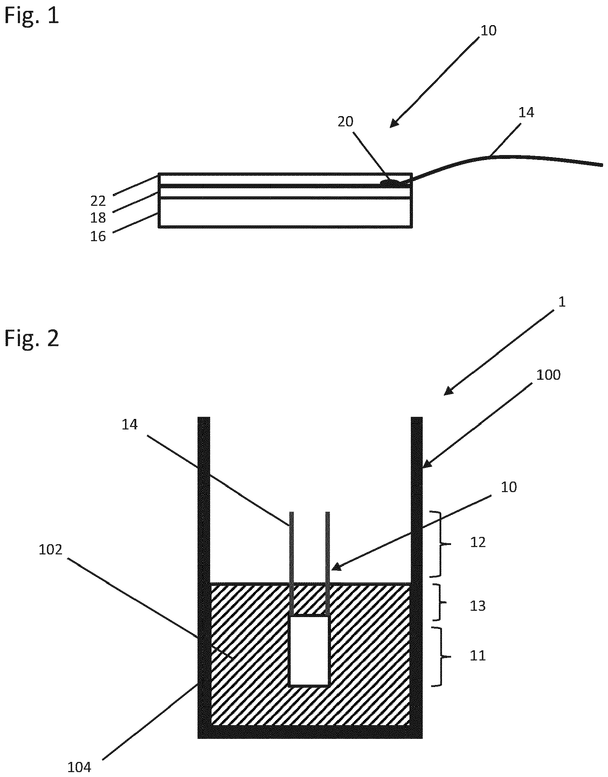

Figur 1 zeigt schematisch ein als Temperatursensorelement ausgeführtes elektrisches Funktionselement 10 in einer Schnittansicht von der Seite. Das elektrische Funktionselement 10 umfasst ein nicht-leitendes Substrat 16. Auf einer Oberfläche des nicht-leitenden Substrats 16 ist ein elektrisch leitfähiges Element 18 in Form einer Dünnschicht angeordnet. Diese ist in dem Beispiel des Temperatursensorelements derart strukturiert, dass eine mäanderförmig auf der Oberfläche des nicht-leitenden Substrats 16 verlaufende Leiterbahn ausgebildet wird. Diese Leiterbahn stellt dabei einen Messwiderstand dar, dessen elektrischer Widerstand sich in charakteristischer Weise mit der Temperatur verändert.

Das elektrisch leitfähige Element 18 bzw. die durch Strukturieren gebildete Leiterbahn wird über Anschlussdrähte 14 an Kontaktstellen 20 elektrisch kontaktiert. Im Fall eines Temperatursensorelements werden beispielsweise zwei oder vier Anschlussdrähte 14 verwendet, um eine Zweipunkt- oder Vierpunkt-Messung des elektrischen Widerstands zu ermöglichen, wobei in der Schnittansicht der Figur 1 nur einer sichtbar ist.

Die elektrisch leitfähige Schicht 18 und die Kontaktstelle 20 sind in dem dargestellten Beispiel der Figur 1 mit einem Abdeckmaterial 22 versehen, um diese vor Umwelteinflüssen zu schützen. Anstelle einer einzigen Schicht, wie in Figur 1 skizziert, kann das Abdeckmaterial 22 auch als ein Schichtsystem mit mehreren verschiedenen Schichten ausgebildet sein.

Figur 2 zeigt eine erste Ausführungsform einer Einheit 1 für Hochtemperaturanwendungen, welche ein elektrisches Funktionselement 10 sowie ein Gehäuse 100 umfasst. Die Einheit 1 ist dabei in einer Schnittansicht von vorne dargestellt. Das Gehäuse 100 umfasst in diesem Ausführungsbeispiel eine Kappe 104, welche beispielsweise aus einer temperaturbeständigen Metalllegierung gefertigt ist. Das Gehäuse 100 umfasst neben der Kappe 104 ein elektrisch isolierendes Material 102, welches die offene Seite der Kappe 104 verschließt. Das elektrisch isolierende Material 102 ist beispielsweise ein teilweise kristallisiertes Glas bzw. eine Glaskeramik.

Ein erster Abschnitt 11 des elektrischen Funktionselements 10 ist dabei vollständig in dem elektrisch isolierenden Material 102 eingebettet. Dieser erste Abschnitt umfasst im Fall eines wie in Figur 1 dargestellten Temperatursensorelements die mäanderförmige Leiterbahn und damit den aktiven Teil des Temperatursensorelements.

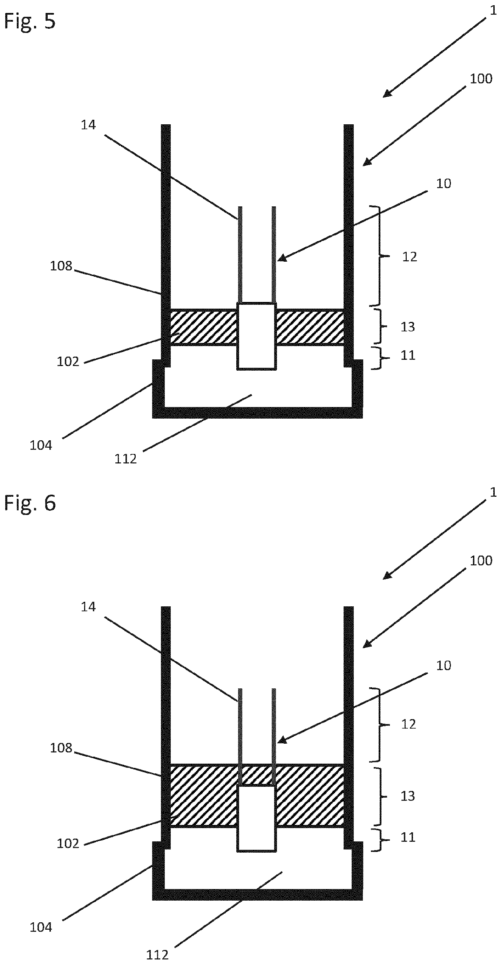

Ein zweiter Abschnitt 12 des elektrischen Funktionselements 10, der Teile der Anschlussdrähte 14 umfasst, ist dabei nicht von dem elektrisch isolierenden Material 102 umschlossen und ist für eine elektrische Kontaktierung von außen zugänglich. In einer alternativen Ausführungsvariante kann das elektrische Funktionselement 10 anstelle von Anschlussdrähten 14 auch Anschlusspads umfassen. Diese wären dann ähnlich wie die in Figur 1 dargestellte Kontaktstelle 20 auf dem nicht-leitenden Substrat 16 angeordnet, so dass dann der zweite Abschnitt entsprechend einen Teil des Substrats 16 umfasst. Ein Ausführungsbeispiel, bei dem der zweite Abschnitt 11 einen Teil des nicht-leitenden Substrats 16 umfasst, wird auch nachfolgend mit Bezug zur Figur 5 beschrieben.

Ein zwischen dem ersten Abschnitt 11 und dem zweiten Abschnitt 12 liegender dritter Abschnitt 13 des elektrischen Funktionselements 10, der die in Figur 1 dargestellten Kontaktstellen 20 umfasst, ist in der in Figur 2 dargestellten Ausführungsform ebenfalls in dem elektrisch isolierenden Material 102 eingebettet, so dass nur ein Teil der Anschlussdrähte 14 aus dem elektrisch isolierenden Material 102 herausragt.

Das elektrisch isolierende Material 102 ist an die Anschlussdrähte 14 angeschmolzen, so dass eine hermetisch dichte Verbindung vorliegt. Ebenso ist das elektrisch isolierende Material 102 an die Kappe 104 angeschmolzen, so dass auch dort eine hermetisch dichte Verbindung vorhanden ist. Durch diese innige Verbindung zwischen dem elektrisch isolierenden Material 102 und dem mindestens einen Funktionselement 10 sowie zwischen dem elektrisch isolierenden Material 102 und der Kappe 104 sind zusätzliche dichtende Elemente überflüssig, so dass die vorgeschlagene Einheit 1 frei von zusätzlichen dichtenden Elementen ist.

Vorteilhafterweise ist der erste Abschnitt 11 mit dem aktiven Teil des elektrischen Funktionselements 10 vollständig in dem isolierenden Material 102 eingeschlossen, so dass dieser weder mit der Umgebung noch mit anderen Bestandteilen der Einheit 1 wie der Kappe 104 wechselwirken kann. Daher ist beispielsweise eine Kontaminierung des elektrischen Funktionselements 10 mit Bestandteilen der Kappe 104 ausgeschlossen.

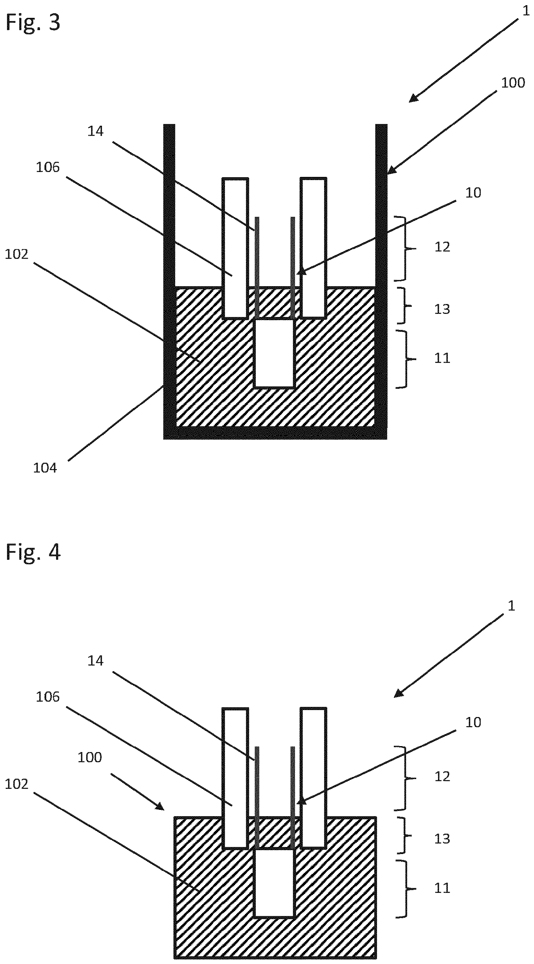

Figur 3 zeigt eine zweite Ausführungsform einer Einheit 1. Diese entspricht im Wesentlichen der mit Bezug zur Figur 2 beschriebenen ersten Ausführungsform, umfasst jedoch zusätzlich ein Halteelement 106.

Das Halteelement 106 ist hier rohrförmig ausgebildet und wird durch das elektrisch isolierende Material 102 gehalten. Dazu ist ein Teil des Halteelements 106 in das elektrisch isolierende Material 102 eingebettet. Das Halteelement 106 ist dabei so angeordnet, dass es die Anschlussdrähte 14 umgibt und diese dadurch mechanisch abstützt. Das Halteelement 106 kann beispielsweise aus einer Keramik bestehen.

Figur 4 zeigt eine dritte Ausführungsform einer Einheit 1. Diese entspricht im Wesentlichen der mit Bezug zur Figur 3 beschriebenen zweiten Ausführungsform, umfasst jedoch keine Kappe 104. Das Gehäuse 100 besteht hier ausschließlich aus einem Formkörper aus dem elektrisch isolierenden Material 102.

Figur 5 zeigt eine vierte Ausführungsform einer Einheit 1. Das Gehäuse 100 umfasst in diesem Ausführungsbeispiel eine Kappe 104, an deren offenes Ende sich ein Schutzrohr 108 anschließt. Die Kappe 104 und das Schutzrohr 108 bestehen beispielsweise beide aus temperaturbeständigen Metalllegierungen und sind beispielsweise durch Schweißen miteinander verbunden.

Das elektrische Funktionselement 10 ist in das Schutzrohr 108 bis in den Bereich der Schutzkappe 104 eingeführt und wird über einen Pfropfen aus dem elektrisch isolierenden Material 102 gehalten und gegen das Schutzrohr 108 abgedichtet, so dass im Bereich der Kappe 104 und am Ende des Schutzrohrs 108 ein abgeschlossener Hohlraum 112 vorliegt. Eine erster Abschnitt 11 des elektrischen Funktionselements 10 befindet sich dabei in dem Hohlraum 112 und ein zweiter Abschnitt 12 des elektrischen Funktionselements 10, der hier die Anschlussdrähte 14 vollständig umfasst, befindet sich außerhalb des Hohlraums und ist nicht durch das elektrisch isolierende Material 102 bedeckt, so dass die Anschlussdrähte 14 von außerhalb des Gehäuses 100 zugänglich sind. Anstelle von Anschlussdrähten 14 könnte das elektrische Funktionselement 10 auch im zweiten Abschnitt 12 angeordnete Anschlusspads aufweisen.

Ein zwischen dem ersten Abschnitt 11 und dem zweiten Abschnitt 12 liegender dritter Abschnitt 13 wird von dem elektrisch isolierenden Material 102 gehalten, wobei das elektrisch isolierende Material in diesem dritten Abschnitt hermetisch dicht mit dem elektrischen Funktionselement 10 verbunden ist. Dabei ist das elektrisch isolierende Material 102 insbesondere an das nicht-leitende Substrat 16 und das Abdeckmaterial 22, vergleiche Figur 1, angeschmolzen. Das elektrisch isolierende Material 102 ist ebenfalls hermetisch dicht mit dem Schutzrohr 108 verbunden, so dass der Hohlraum 112 hermetisch dicht verschlossen ist.

Figur 6 zeigt eine fünfte Ausführungsform der Einheit 1, welche im Wesentlichen der mit Bezug zur Figur 5 beschriebenen vierten Ausführungsform entspricht. Der mit dem elektrisch isolierenden Material 102 verbundene dritter Bereich 13 des elektrischen Funktionselements 10 schließt hier jedoch zusätzlich einen Teil der Anschlussdrähte 14 mit ein, so dass insbesondere Kontaktstellen 20 zwischen dem elektrisch leitfähigen Element 18, vergleiche Figur 1, und den Anschlussdrähten innerhalb des von dem elektrisch isolierenden Materials 102 umschlossenen Bereichs liegen. Die Kontaktstellen 20 werden so besonders gut geschützt.

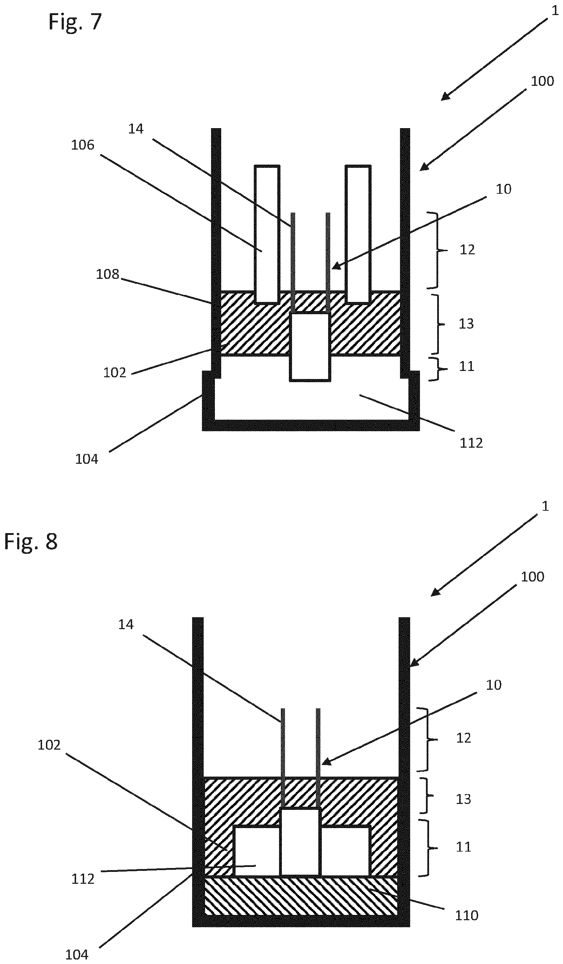

Figur 7 zeigt eine sechste Ausführungsform einer Einheit 1. Diese entspricht im Wesentlichen der mit Bezug zur Figur 6 beschriebenen fünften Ausführungsform, umfasst jedoch zusätzlich ein Halteelement 106.

Das Halteelement 106 ist hier rohrförmig ausgebildet und wird durch das elektrisch isolierende Material 102 gehalten. Dazu ist ein Teil des Halteelements 106 in das elektrisch isolierende Material 102 eingebettet. Das Halteelement 106 ist dabei so angeordnet, dass es die Anschlussdrähte 14 umgibt und diese dadurch mechanisch abstützt. Das Halteelement 106 kann beispielsweise aus einer Keramik bestehen.

Figur 8 zeigt eine siebte Ausführungsform einer Einheit 1. Diese entspricht im Wesentlichen der mit Bezug zur Figur 6 beschriebenen fünften Ausführungsform, jedoch sind die zum Inneren des Hohlraums 112 weisenden Wände der Kappe 104 mit einem nicht-metallischen Material ausgekleidet.

Die Wandung am geschlossenen Ende der Kappe 104 wird in diesem Beispiel mit einem Schutzelement 110 ausgekleidet. Das Material des Schutzelements 110 ist beispielsweise ein Glas, eine Keramik oder eine Glaskeramik. Die seitlichen Wandungen des Hohlraums 112 sind mit dem elektrisch isolierenden Material 102 ausgekleidet, wobei diese Seitenwände in dem in Figur 8 dargestellten Ausführungsbeispiel einstückig mit dem pfropfenförmigen Stück des elektrisch isolierenden Materials 112 ausgeführt sind, welches den dritten Abschnitt 13 des elektrischen Funktionselements 10 hält.

Des Weiteren ist der erste Abschnitt 11 des elektrischen Funktionselements 10 in der siebten Ausführungsform so gewählt, dass dieser bei Ausführung des elektrischen Funktionselements 10 als Temperaturmesswiderstand die den Messwiderstand darstellende Leiterbahn vollständig enthält. Somit befindet sich in dieser Ausführungsform der aktive Teil des elektrischen Funktionselements 10 vollständig innerhalb des Hohlraums 112.

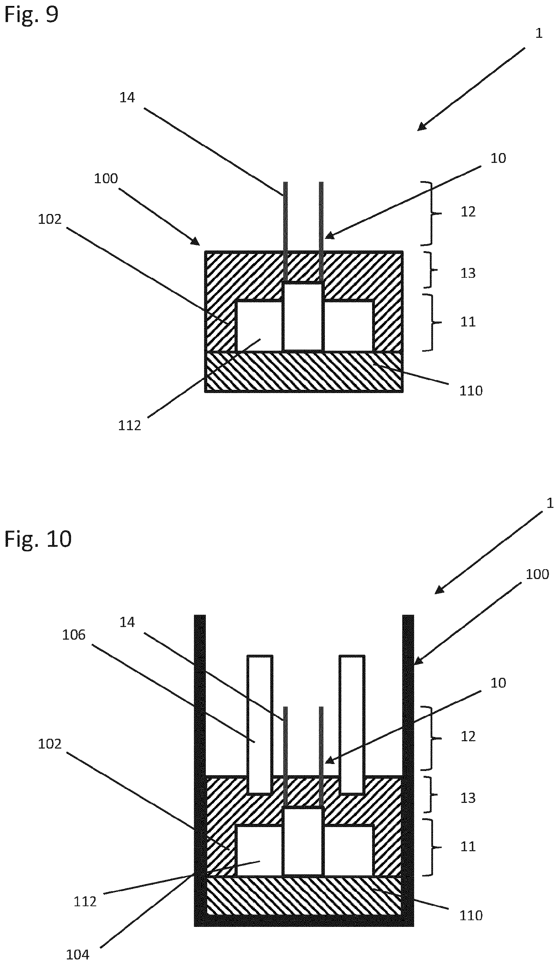

Figur 9 zeigt eine achte Ausführungsform einer Einheit 1. Diese entspricht im Wesentlichen der mit Bezug zur Figur 8 beschriebenen siebten Ausführungsform, jedoch weist die achte Ausführungsform keine Kappe 104 auf. Das Gehäuse 100 besteht somit aus dem elektrisch isolierenden Material 102 und dem Schutzelement 110.

Figur 10 zeigt eine neunte Ausführungsform einer Einheit 1. Diese entspricht im Wesentlichen der mit Bezug zur Figur 9 beschriebenen achten Ausführungsform, umfasst jedoch zusätzlich ein Halteelement 106.

Das Halteelement 106 ist hier rohrförmig ausgebildet und wird durch das elektrisch isolierende Material 102 gehalten. Dazu ist ein Teil des Halteelements 106 in das elektrisch isolierende Material 102 eingebettet. Das Halteelement 106 ist dabei so angeordnet, dass es die Anschlussdrähte 14 umgibt und diese dadurch mechanisch abstützt. Das Halteelement 106 kann beispielsweise aus einer Keramik bestehen.

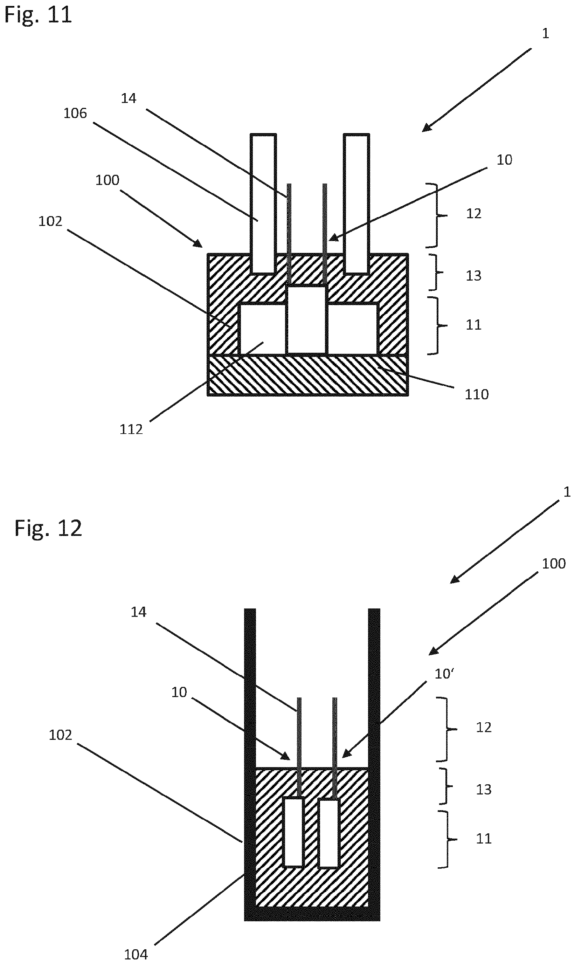

Figur 11 zeigt eine zehnte Ausführungsform einer Einheit 1. Diese entspricht im Wesentlichen der mit Bezug zur Figur 10 beschriebenen neunten Ausführungsform, jedoch weist die zehnte Ausführungsform keine Kappe 104 auf. Das Gehäuse 100 besteht somit aus dem elektrisch isolierenden Material 102, welches einen topfförmiger Formkörper bildet, und dem Schutzelement 110.

Figur 12 zeigt eine elfte Ausführungsform einer Einheit 1 in einer Schnittansicht von der Seite. Diese ist ähnlich der mit Bezug zur Figur 1 beschriebenen ersten Ausführungsform ausgestaltet, weist aber zusätzlich ein weiteres elektrisches Funktionselement 10' auf. Dieses ist in diesem Beispiel als ein Heizelement ausgestaltet und neben dem elektrischen Funktionselement 10 angeordnet, welches als Temperatursensorelement ausgestaltet ist.

Die in Figur 12 dargestellte Einheit 1 kann als thermischer Durchflusssensor eingesetzt werden. Dabei wird unter Verwendung der mittels des als Temperatursensorelement ausgebildeten elektrischen Funktionselements 10 ermittelten Temperatur ein Heizstrom des als Heizelement ausgestalteten weiteren elektrischen Funktionselement 10' derart geregelt, dass die Temperatur konstant gehalten wird. Je mehr Fluid an der Einheit 1 vorbeiströmt, desto mehr Wärme wird auf das Fluid übertragen und desto höher muss der Heizstrom für eine konstante Temperatur eingestellt werden. Entsprechend kann dann aus dem Heizstrom auf die Menge des vorbeiströmenden Fluids geschlossen werden.

### Bezugszeichenliste

- 1: Einheit
- 10: elektrisches Funktionselement
- 10': weiteres elektrisches Funktionselement
- 11: erster Abschnitt
- 12: zweiter Abschnitt
- 13: dritter Abschnitt
- 14: Anschlussdraht
- 16: nicht-leitendes Substrat
- 18: elektrisch leitfähiges Element
- 20: Kontaktstelle
- 22: Abdeckmaterial

- 100: Gehäuse
- 102: elektrisch isolierendes Material
- 104: Kappe
- 106: Halteelement
- 108: Schutzrohr
- 110: Schutzelement
- 112: Hohlraum

## Patentansprüche

1. Einheit (1) für Hochtemperaturanwendungen, insbesondere für Anwendungen oberhalb von 700 °C, umfassend ein Gehäuse (100) und mindestens ein elektrisches Funktionselement (10), wobei das mindestens eine elektrische Funktionselement (10) ein nicht-leitendes Substrat (16), ein elektrisch leitfähiges Element (18) und mindestens einen Anschlussdraht (14) oder mindestens ein Anschlusspad umfasst, wobei das mindestens eine elektrische Funktionselement (10) derart in das Gehäuse (100) eingesetzt ist, dass ein erster Abschnitt (11) des elektrischen Funktionselements (10) innerhalb des Gehäuses (100) aufgenommen und durch das Gehäuse (100) von der Umgebung abgeschirmt ist und ein zweiter Abschnitt (12) des elektrischen Funktionselements (10), welcher zumindest einen Teil des mindestens einen Anschlussdrahts (14) oder des Anschlusspads umfasst, von außerhalb zugänglich ist, wobei das mindestens eine elektrische Funktionselement (10) zwischen dem ersten Abschnitt (11) und dem zweiten Abschnitt (12) einen dritten Abschnitt (13) aufweist, welcher in einem elektrisch isolierenden Material (102) des Gehäuses (100) eingebettet ist, **dadurch gekennzeichnet, dass** das elektrisch isolierende Material (102) das Gehäuse (100) gegenüber dem elektrischen Funktionselement (10) abdichtet, wobei das elektrisch isolierende Material (102) ausgewählt ist aus einem Glas, einer Glaskeramik einer Kombination mehrerer dieser Materialien oder aus einem Verbundwerkstoff, der als Hauptbestandteil ein Glas oder eine Glaskeramik aufweist und wobei das isolierende Material (102) an das mindestens eine elektrische Funktionselement (10) angeschmolzen ist, so dass an einer Grenzfläche zwischen diesen eine physikalische und/oder chemische Verbindung ausgebildet ist.

2. Einheit (1) nach Anspruch 1, **dadurch gekennzeichnet, dass** das Gehäuse (100) eine Kappe (104) aus einem temperaturbeständigen Material umfasst, welche das elektrisch isolierende Material (102) zumindest teilweise umschließt.

3. Einheit (1) nach Anspruch 1 oder 2, **dadurch gekennzeichnet, dass** das Gehäuse (100) ein Schutzrohr (108) aus einem temperaturbeständigen Material umfasst, welches zumindest einen Teil des zweiten Abschnitts (12) des elektrischen Funktionselements (10) umgibt, wobei das Schutzrohr (108) bevorzugt mit einer Kappe (104) des Gehäuses (100) verbunden ist, insbesondere mittels Laserschweißen oder mittels Löten.

4. Einheit (1) nach einem der Ansprüche 2 bis 3, **dadurch gekennzeichnet, dass** das temperaturbeständige Material des Schutzrohrs (108) und/oder das temperaturbeständige Material der Kappe (104) ausgewählt ist aus einem temperaturbeständigen Stahl bzw. Legierung oder einer temperaturbeständigen Keramik, insbesondere ausgewählt ist aus Alloy 600, Stahl 1.4762, Al₂O₃-Keramik.

5. Einheit (1) nach einem der Ansprüche 1 bis 4, **dadurch gekennzeichnet, dass** das Gehäuse (100) ein Schutzelement (110) aus einem Glas, einer Glaskeramik, einer Keramik oder einer Kombination mehrerer dieser Materialien umfasst.

6. Einheit (1) nach einem der Ansprüche 1 bis 5, **dadurch gekennzeichnet, dass** der erste Abschnitt (11) des elektrischen Funktionselements (10) innerhalb des Gehäuses (100) in einem Hohlraum (112) aufgenommen ist, wobei der Hohlraum (112) bevorzugt evakuiert ist oder mit einem Inertgas, beispielsweise Stickstoff oder Argon, gefüllt ist.

7. Einheit (1) nach dem vorhergehenden Anspruch, **dadurch gekennzeichnet, dass** Wände des Hohlraums (112) aus dem elektrisch isolierenden Material bestehen und/oder eine Wand des Hohlraums (112) durch ein Schutzelement (110) gebildet wird.

8. Einheit (1) nach einem der Ansprüche 1 bis 7, **dadurch gekennzeichnet, dass** zumindest das elektrisch leitende Element (18) und/oder eine elektrische Kontaktstelle (20) zwischen dem mindestens einen Anschlussdraht (14) und dem elektrisch leitfähigen Element (18) des mindestens einen Funktionselements (10) mit einem Abdeckmaterial (22) bedeckt ist, wobei das Abdeckmaterial (22) bevorzugt von dem elektrisch isolierenden Material (102) verschieden ist.

9. Einheit (1) nach einem der Ansprüche 1 bis 8, **dadurch gekennzeichnet, dass** der erste Abschnitt (11) des mindestens einen elektrischen Funktionselements (10) vollständig in dem elektrisch isolierenden Material (102) des Gehäuses eingebettet ist.

10. Einheit (1) nach einem der Ansprüche 1 bis 9, **dadurch gekennzeichnet, dass** eine elektrische Kontaktstelle (20) zwischen dem mindestens einen Anschlussdraht (14) und dem elektrisch leitfähigem Element (18) eines elektrischen Funktionselements (10) innerhalb des dritten Abschnitts (13) angeordnet ist und somit in dem elektrisch isolierenden Material (102) eingebettet ist.

11. Einheit (1) nach einem der Ansprüche 1 bis 10, **dadurch gekennzeichnet, dass** die Einheit (1) zusätzlich mindestens ein Halteelement (106) zur Unterstützung des mindestens einen Anschlussdrahts (14) umfasst.

12. Einheit (1) nach dem vorhergehenden Anspruch, **dadurch gekennzeichnet, dass** das mindestens eine Halteelement (106) aus demselben Material wie das elektrisch isolierende Material (102) besteht und mit diesem einstückig ausgebildet ist oder dass das mindestens eine Halteelement (106) aus einem anderen Material ausgewählt aus einem Glas, einer Glaskeramik oder einer Keramik besteht, wobei das mindestens eine Halteelement (106) in dem elektrisch isolierenden Material (102) teilweise eingebettet ist und durch dieses gehalten wird.

13. Einheit (1) nach einem der Ansprüche 1 bis 12, **dadurch gekennzeichnet, dass** ein thermischer Ausdehnungskoeffizient des elektrisch isolierenden Materials (102) an einen thermischen Ausdehnungskoeffizienten des mindestens einen elektrischen Funktionselements (10) angepasst ist, wobei bevorzugt ein Unterschied zwischen den thermischen Ausdehnungskoeffizienten kleiner als 5·10⁻⁶/K, besonders bevorzugt kleiner als 3·10⁻⁶/K und ganz besonders bevorzugt kleiner als 1·10⁻⁶/K ist.

14. Einheit (1) nach einem der Ansprüche 1 bis 13, **dadurch gekennzeichnet, dass** ein elektrisches Funktionselement (10) als ein Temperatursensorelement ausgebildet ist, wobei das Temperatursensorelement bevorzugt ein Keramiksubstrat und eine darauf angeordnete strukturierte Widerstandsschicht umfasst, wobei das Temperatursensorelement besonders bevorzugt als ein Pt100, Pt200, Pt500, Pt1000 oder Pt10000 Temperatursensor ausgebildet ist.

15. Einheit (1) nach einem der Ansprüche 1 bis 14, **dadurch gekennzeichnet, dass** ein elektrisches Funktionselement (10) als ein Heizelement ausgebildet ist und/oder dass die Einheit (1) mindestens zwei elektrische Funktionselemente (10, 10') umfasst, wobei die Einheit (1) bevorzugt als ein thermischer Durchflussmesser mit mindestens einem Temperatursensorelement und mindestens einem Heizelement ausgebildet ist.

16. Einheit (1) nach einem der Ansprüche 1 bis 15, **dadurch gekennzeichnet, dass** das elektrisch isolierende Material (102) eine Glaskeramik ist, umfassend
| | |
|---|---|
| La₂O₃ | größer 0,3 Mol-% bis kleiner 5 Mol-%, |
| Nb₂O₅ | 0 Mol-% bis 9 Mol-%, |
| Ta₂O₅ | 0 Mol-% bis 7 Mol-%, |
wobei
| | |
|---|---|
| Σ (A₂O₅) | größer 0,2 Mol-% bis 9 Mol-%, |
wobei A ein Element ist, welches in Oxiden üblicherweise die Oxidationszahl V+ aufweist, und beispielsweise Nb und/oder Ta oder P und / oder Mischungen hiervon umfasst oder umfassen kann.
